# EUROPEAN PATENT SPECIFICATION

(11) **EP 3 318 907 B1**
(45) Date of publication and mention of the grant of the patent: **03.08.2022**
(21) Application number: 16197585.9
(22) Date of filing: 07.11.2016
(51) Int. Cl.: G02B 6/38

(54) **PRECONNECTORIZED OPTICAL CABLE ASSEMBLY WITH SECURED STRENGTH MEMBER**
VORKONFEKTIONIERTE OPTISCHE KABELANORDNUNG MIT GESICHERTEM VERSTÄRKUNGSELEMENT
CÂBLE OPTIQUE PRÉCONNECTORISÉ AVEC ÉLÉMENT DE RENFORCEMENT SÉCURISÉ

(43) Date of publication of application: 09.05.2018
(73) Proprietor: Corning Optical Communications LLC, Charlotte, NC 28216 (US)
(72) Inventor: de Jong, Michael, Colleyville, TX 76034 (US); Matthies, Jürgen, 58300 Wetter (DE); Matzen, Michael, 4760 Vordingborg (DK); Balcer, Anders, 4760 Vordingborg (DK)
(74) Representative: Epping - Hermann - Fischer

(56) References cited:
- EP-A2- 0 095 281
- US-A- 4 588 256
- US-A1- 2007 077 010

## Description

### Technical Field

The disclosure relates generally to a preconnectorized optical cable assembly, wherein the optical cable comprises a plurality of tensile elements to provide a strain relief for an optical transmission element of the optical cable.

### Background

Communication networks are used to transport a variety of signals such as voice, video, data transmission and the like. Traditional communication networks use copper wires in cables for transporting information and data. However, copper cables have drawbacks because they are large, heavy, and can only transmit a relatively limited amount of data. An optical waveguide is capable of transmitting an extremely large amount of bandwidth compared with a copper conductor. Moreover, an optical waveguide cable is much lighter and smaller compared with a copper cable having the same bandwidth capacity. Consequently, optical waveguide cables replaced most of the copper cables in long-haul communication network links, thereby providing greater bandwidth capacity for long-haul links. As optical waveguides are deployed deeper into communication networks, subscribers will have access to increased bandwidth.

However, there are certain obstacles that make it challenging and/or expensive to route optical waveguides/optical cables deeper into the communication network, i.e. closer to the subscriber. For instance, making a suitable optical connection between optical waveguides is much more difficult than making an electrical connection between copper wires. A common way to connect optical waveguides is by using optical connectors. Optical connectors generally hold the mating optical waveguides in respective ferrules of the mating connectors.

Terminating an optical cable with a connector may become particularly complex depending on the construction of the optical cable and the strain relief performance required. For instance, if the tensile elements are stranded and embedded in the jacket, then accessing and strain-relieving the tensile elements can provide challenges.

If an optical cable comprising tensile elements has to be terminated by an optical connector, the tensile elements have to be secured in the optical connector such that the tensile elements and attachment withstand a defined tensile load without being damaged to enable strain relief in the cable assembly and to preserve the performance of the optical waveguides. Moreover, as higher strain-relief forces are desired for the cable assemblies, strain-relieving the cable to the connector becomes more challenging.

US 4,588,256 A and EP 0095281 A2 describe optical fiber connectors, wherein strength members are secured between strain relief members. US 4,588,256 describes inner and outer crimp components, wherein the outer crimp component is being threaded on the inner crimp component and a free space is provided between the front face of the inner crimp component and the outer crimp component to enable the tensile elements to move in the free space.

US 2007/0077010 A1 is directed to a preconnectorized optical cable, wherein two shells of a crimp housing are held together by a crimp band.

There is an unresolved need to provide a preconnectorized optical cable, i.e. an optical cable assembly being terminated by a plug connector, that may withstand strain-relief forces, while still securing the tensile elements of the cable efficiently and reliably to the plug connector.

### Summary

A preconnectorized optical cable according to the claimed invention, wherein tensile elements of the cable are secured in a plug connector terminating the preconnectorized optical cable so that the tensile elements are efficiently and reliably fixed to the plug connector and the coupling between the optical components of the cable and the plug connector is almost not effected when the cable is bent, is specified in claim 1.

The preconnectorized optical cable comprises an optical transmission element comprising at least one optical waveguide, a plurality of tensile elements, a cable jacket and a plug connector. The plug connector is attached to an end section of the cable, thereby connectorizing the at least one optical waveguide. The plug connector comprises a tensile element securing component for securing the tensile elements. The tensile element securing component comprises an inner crimp component and an outer crimp component. The inner crimp component has a front face at which the tensile elements protrude out of the cable jacket and the inner crimp component. A free space is provided between the front face of the inner crimp component and the outer crimp component to enable the tensile elements to move in the free space, when the optical cable is bent.

The free space in the hollow tube of the outer crimp component allows the arrangement of the optical cable and the optical connector to be almost completely unaffected by any movement/bending of the optical cable. The tensile elements are moved out of the cable jacket and extend in the free space especially, when the optical cable is bent, especially when the cable is bent against the preferential bending direction.

The tensile elements are secured between the inner crimp component and the outer crimp component being crimped to the inner crimp component. The plug connector comprises a connector assembly for securing the at least one optical waveguide and a crimp body. The connector assembly may be configured of one of the SC, LC, FC, ST, MT, and MT-RJ type. The crimp body has a longitudinal passageway for passing the optical transmission element therethrough, a cable clamping portion and a connector assembly clamping portion. The cable clamping portion secures the tensile element securing component, and the connector assembly clamping portion secures the connector assembly.

According to the claimed invention, the outer crimp component is configured as a hollow body to receive the inner crimp component. The inner crimp component is configured as a tube to receive the optical cable. The optical transmission element of the optical cable protrudes out of an end face of the inner crimp component and is guided further in the hollow body of the outer crimp component. The optical waveguide of the optical transmission element protrudes out of the outer crimp component at an end face of the outer crimp component.

The tensile elements also protrude out of the end face of inner crimp component and are folded back and are arranged on the outer surface of the inner crimp component. That means that the tensile elements are arranged between the outer surface of the inner crimp component and the inner surface of the outer crimp component. In order to secure the tensile elements, the outer crimp component is crimped to the inner crimp component. As a result, the tensile elements are fixed between the inner crimp component and the outer crimp component by crimping the outer crimp component to the inner crimp component.

The outer crimp component has a first portion and a second portion. The hollow body of the first portion of the outer crimp component has an inner diameter that is larger than the inner diameter of the second portion of the outer crimp component. The hollow body of the first portion of the outer crimp component is configured to receive the inner crimp component. The hollow body of the second portion of the outer crimp component is configured to only receive the optical transmission element that protrudes out of the inner crimp component within the hollow body of the outer crimp component.

The outer crimp component has an inner wall at the transition between the first and second portion of the outer crimp component. The inner wall of the outer crimp component is arranged within the hollow body of the outer crimp component at the transition of the hollow body of the first portion of the outer crimp component to the hollow body of the second portion of the outer crimp component. The inner crimp component is arranged within the hollow body of the first portion of the outer crimp component such that the free space is provided between the front face of the inner crimp component and the inner wall of the outer crimp component.

The free space within the first portion of the outer crimp component between the front face of the inner crimp component and the inner wall of the outer crimp component enables the tensile elements to be moved in the free space out of the cable jacket, when the optical cable is bent. Furthermore, the tensile elements are efficiently and reliably fixed between the inner crimp component and the outer crimp component so that the tensile elements provide a strain relief to the optical transmission element inside the optical cable.

### Brief Description of the Drawings

Figure 1 shows an optical cable to be terminated by a plug connector.
Figure 2A shows a perspective view of a preconnectorized optical cable, wherein a tensile element securing component in a non-crimped configuration and a connector assembly are arranged within a shell of a crimp body.
Figure 2B shows a perspective view of a preconnectorized optical cable, wherein a tensile element securing component in a crimped configuration and a connector assembly are arranged in a shell of a crimp body.
Figure 2C shows a quarter cut of a preconnectorized optical cable, wherein a tensile element securing component and a connector assembly are arranged within a crimp body.
Figure 3 shows a perspective view of a shell of a crimp body.
Figure 4 shows a quarter cut of a tensile element securing component with an optical cable arranged within the tensile element securing component.
Figure 5A shows an outer perspective view of a tensile element securing component in a non-crimped configuration.
Figure 5B shows an outer perspective view of a tensile element securing component in a crimped configuration.
Figure 6A shows a perspective view of an inner crimp component of a tensile element securing component.
Figures 6B to 6D show different cross-sectional views of the inner crimp component of the tensile element securing component.
Figure 7A shows a perspective view of an outer crimp component of a tensile element securing component.
Figures 7B and 7C show different cross-sectional views of the outer crimp component of the tensile element securing component.
Figure 8A shows an exploded view of a preconnectorized optical cable with a tensile element securing component in a non-crimped configuration.
Figure 8B shows an exploded view of a preconnectorized optical cable with a tensile element securing component in a crimped configuration.
Figure 8C shows a preconnectorized optical cable being terminated with a plug connector.
Figure 9A shows a perspective view of a preconnectorized optical cable not covered by the claims, wherein a connector assembly and a tensile element securing component are arranged within a shell of a crimp body.
Figure 9B shows a quarter cut of the preconnectorized optical cable not covered by the claims, wherein a connector assembly and a tensile element securing component are arranged within a shell of a crimp body.
Figures 10A and 10B show a quarter cut of an optical cable not covered by the claims being arranged in a tensile element securing component.
Figure 10C shows a perspective outer view of a tensile element securing component terminating an optical cable not covered by the claims.
Figure 11A shows a perspective view of an inner component of a tensile element securing component of the preconnectorized optical cable not covered by the claims.
Figure 11B shows a cross-sectional view of an inner component of a tensile element securing component of the other embodiment of the preconnectorized optical cable.
Figure 12A shows a perspective view of an outer component of a tensile element securing component of the preconnectorized optical cable not covered by the claims.
Figures 12B and 12C show different cross-sectional views of an outer component of a tensile element securing component of the preconnectorized optical cable not covered by the claims.
Figure 13 shows an exploded view of the preconnectorized optical cable not covered by the claims and comprising a tensile element securing component terminating an optical cable.

### Detailed Description

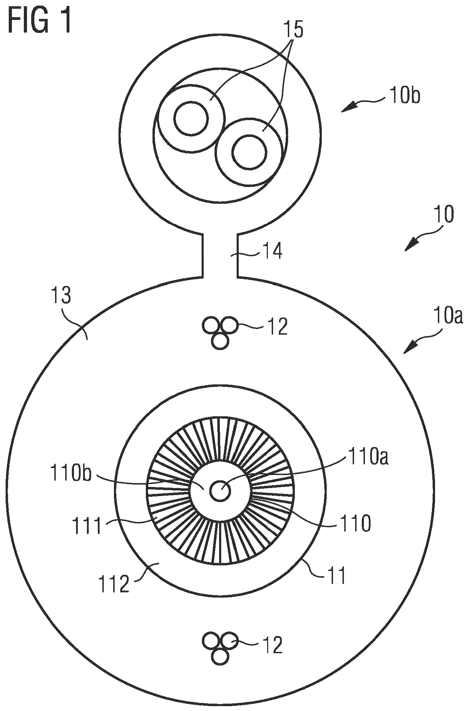

Figure 1 shows an optical cable 10 being configured as a figure-eight cable. The optical cable comprises an optical component/optical lobe 10a and an electrical component 10b, for example a toning lobe 10b, which are connected by a web 14. The electrical component 10b may comprise a twisted pair of conductive wires 15. The optical component 10a may comprise a cable jacket 13 surrounding an optical transmission element/subunit 11. The optical transmission element 11 comprises at least one optical waveguide 110. The optical waveguide 110 comprises an optical fiber core 110a that is surrounded by a cladding 110b. A strength member 111 is arranged around the at least one optical waveguide 110. The strength member 111 may be configured as a plurality of aramid yarns being distributed around the optical transmission element 110. The strength member 111 is surrounded by a protective sleeve 112 of the optical transmission element/optical subunit 11.

The optical cable 10 further comprises a plurality of tensile elements 12. The term "tensile element" means either a strength component or a strength member of the cable. As used herein, the term "strength component" means a strength element of the cable having anti-buckling strengths, while the term "strength member" means a strength element of the cable that lacks anti-buckling strengths. The tensile elements 12 may be metal wires. The tensile elements 12 are embedded in the cable jacket 13. Figure 1 shows the tensile elements 12 being arranged in two bunches of steel wires. By way of example, each of the bunches may comprise three single wires having a diameter of 0.25 mm, but any suitable number of bunches, wires per bunch or arrangement in the cable is possible.

The plurality of tensile elements 12 is embedded in the cable jacket 13 such that the optical cable 10 has a preferential bending direction. When the optical cable is bent in the preferential bending direction each of the tensile elements in the two bunches are bent in the same bending radius. If, on the other hand, the optical cable 1 is bent against the preferential bending direction, if the optical cable is bent in a plane in which both of the bunches of the tensile elements 12 are arranged. That means that, if the optical cable 10 is bended against the preferential bending direction, the tensile elements are bent with different bending radii.

As a consequence, the tensile elements 12 of the bunch having the larger bending radius are drawn into the cable jacket 13, whereas the tensile elements 12 of the other bunch having the smaller bending radius are drawn out of the cable jacket 13. In the following different embodiments of a preconnectorized optical cable comprising a plug connector in which the tensile elements of the optical cable are secured, are described. The preconnectorized optical cable is configured such that any movement/bending of the optical cable almost does not affect the spatial relationship between the components of the optical cable, i.e. in particular the optical transmission element of the optical cable, and the plug connector.

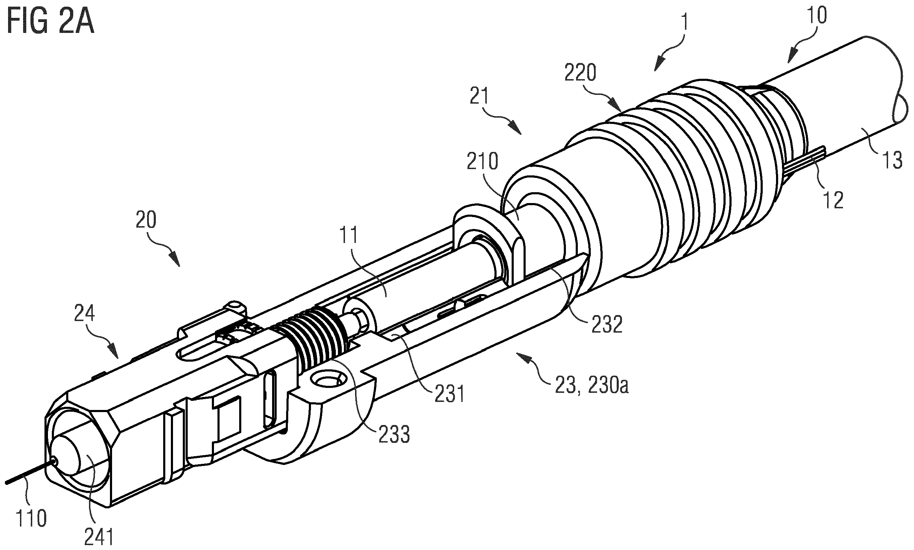

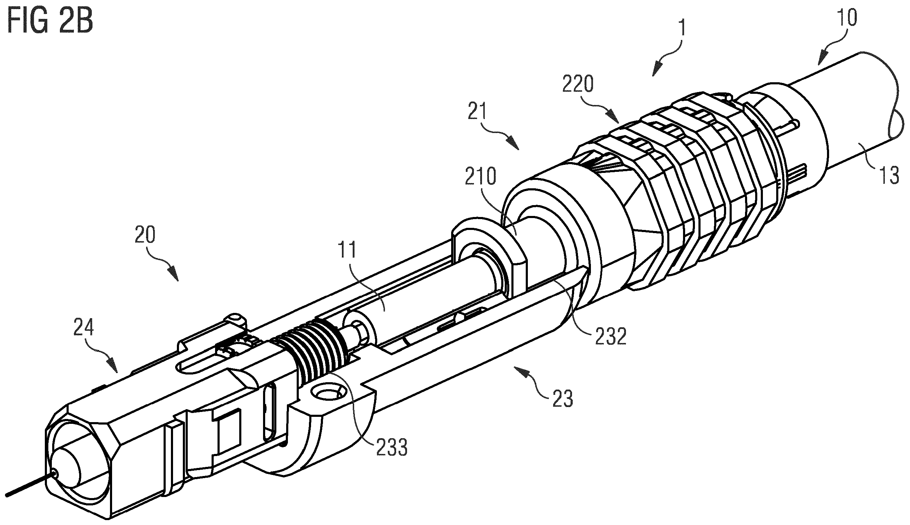

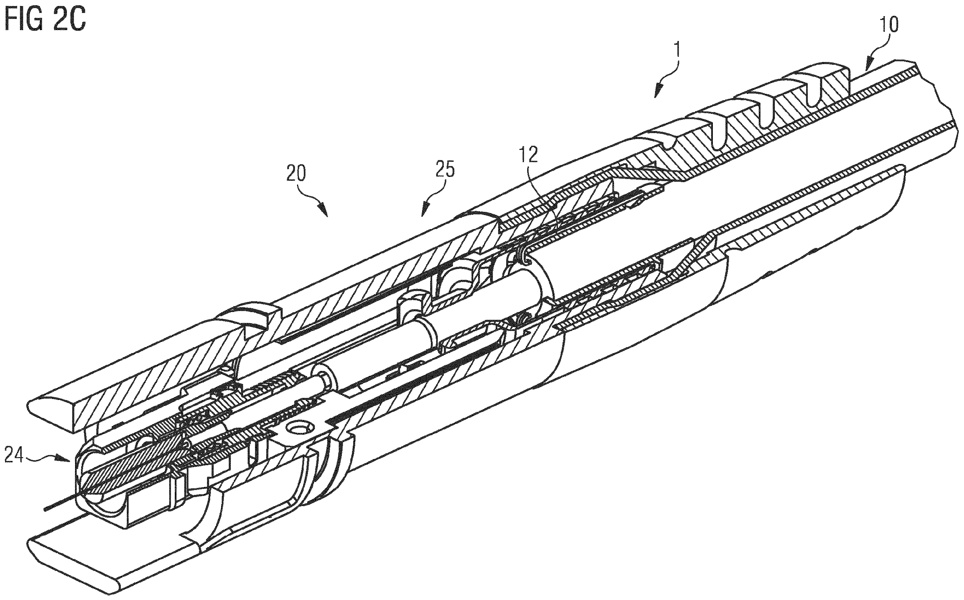

Figures 2A to 8B show components of an embodiment of a preconnectorized optical cable 1 covered by the claims. Figures 2A and 2B show a perspective cross-sectional view of the preconnectorized optical cable 1 comprising components of a plug connector 20 that terminates an optical cable 10. Figure 2C shows a quarter-cut view of the preconnectorized optical cable 1 comprising the optical cable 10 being terminated by the plug connector 20.

The optical cable 10 comprises the optical component 10a as shown in Figure 1. The plug connector 20 is attached to an end section of the cable 10, thereby connectorizing the optical waveguide 110. The plug connector 20 comprises a tensile element securing component 21 for securing the tensile elements 12, a connector assembly 24 for securing the optical waveguide 110 and a crimp body 23.

Figures 2A and 2B only show one of two shells 230a of the crimp body 23. The crimp body 23/the shell 230a has a longitudinal passageway 231 for passing the optical transmission element 11 of the optical cable 10 there through. The crimp body 23 further comprises a cable clamping portion 232 and a connector assembly clamping portion 233. The cable clamping portion 232 secures the tensile element securing component 21 and the connector assembly clamping portion 233 secures the connector assembly 24.

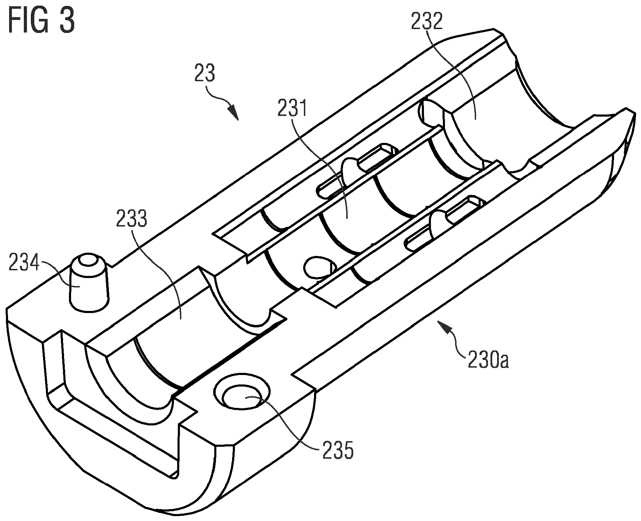

Figure 3 shows one of the shells 230a of the crimp body 23. The cable clamping portion 232 is arranged at a first end of the crimp body 23/the shell 230a. The connector assembly clamping portion 233 is arranged at an opposite second end of the crimp body 23/the shell 230a. The passageway 231 for passing the optical transmission element 11 is arranged between the cable clamping portion 232 and the connector assembly clamping portion 233.

A first portion of the hollow body of the crimp body 23 forms the cable clamping portion 232. A second portion of the crimp body 23 forms the connector assembly clamping portion 233 and a third portion of the hollow body of the crimp body 23 forms the longitudinal passageway 231.

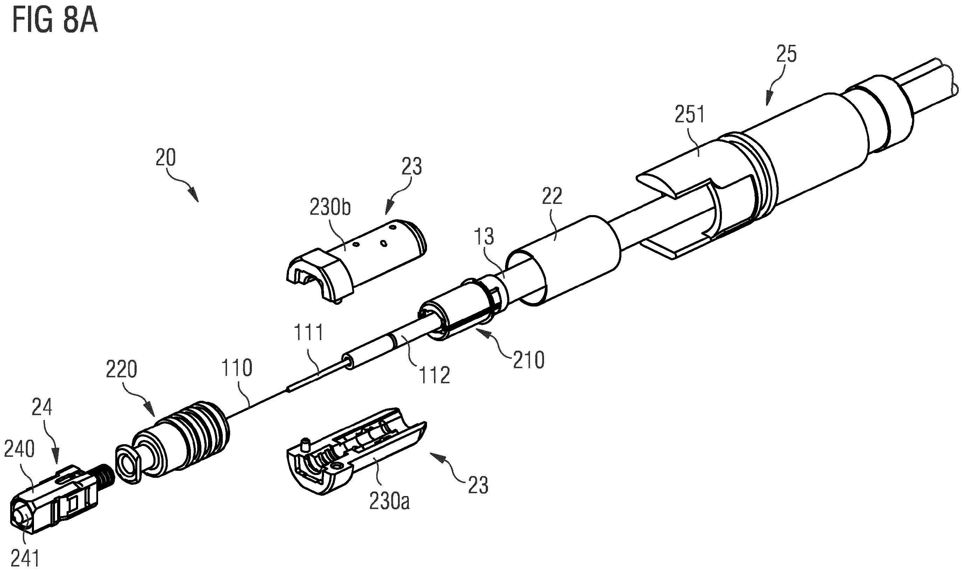

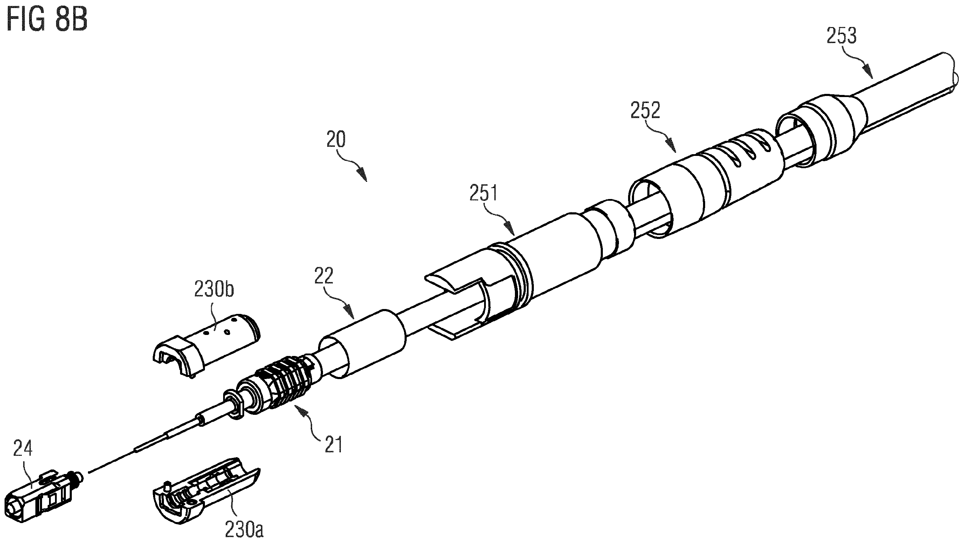

A further shell 230b, not shown in Figure 3, is embodied in the same manner as shown for the shell 230a and is arranged above the shell 230a so that the connected shells form the crimp body 23 having a hollow body. The further shell 230b is shown, for example, in Figures 8A and 8B described below. In order to align the two shells 230a and 230b of the tensile element securing component 21, each of the shells comprises a protruding part/pin 234 and a cavity 235. In order to align the two shells, the pin 234 of the shell 230a is put in the cavity 235 of the shell 230b and vice versa.

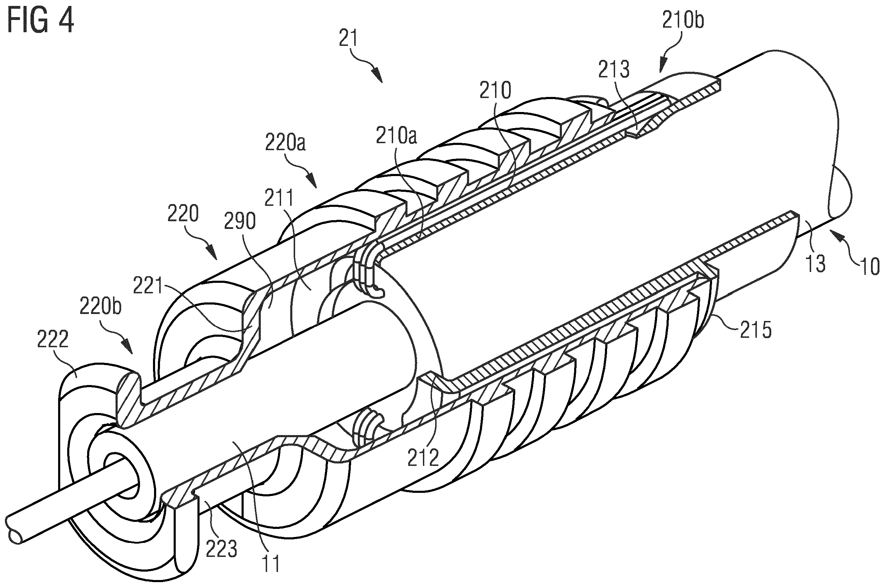

Figure 4 shows a perspective view of a quarter cut of the preconnectorized optical cable 1 comprising the optical cable 10 and the tensile element securing component 21. The tensile element securing component 21 comprises an inner crimp component 210 and an outer crimp component 220. As shown in Figure 4, the tensile elements 12 are secured between the inner crimp component 210 and the outer crimp component 220. In order to fix the tensile elements 12 between the inner crimp component 210 and the outer crimp component 220, the outer crimp component 220 is crimped on the inner crimp component 210.

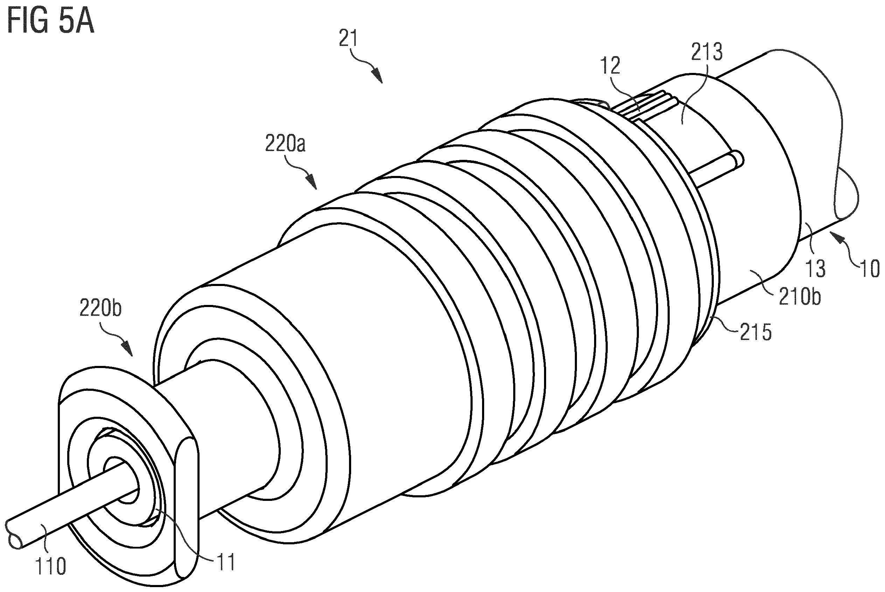

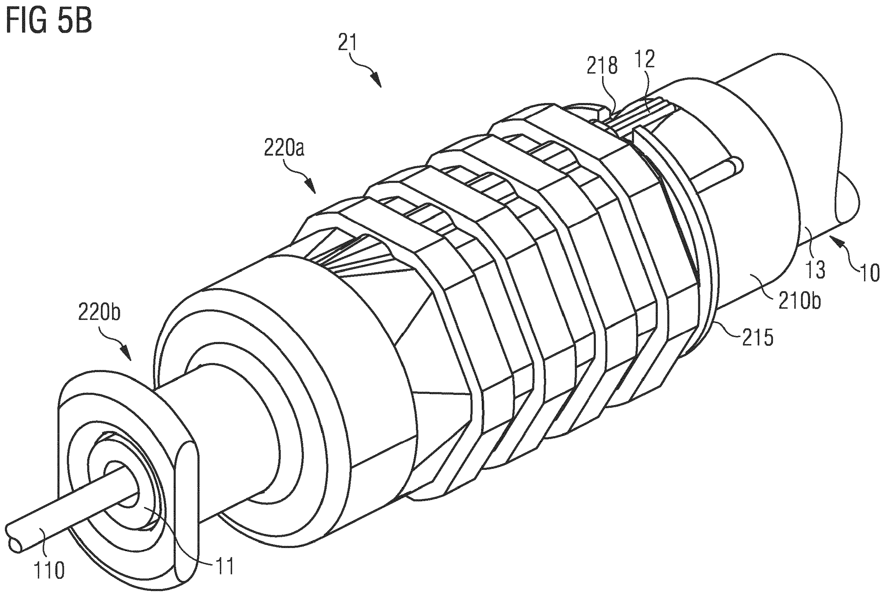

Figure 5A shows an outer perspective view of the preconnectorized optical cable 1 comprising the optical cable 10 that is terminated by the tensile element securing component 21 of the plug connector, wherein the tensile element securing component 21 is shown in a non-crimped state. Figure 5B shows an outer perspective view of the preconnectorized optical cable 1, wherein the optical cable 10 is terminated by the tensile element securing component 21 of the plug connector 20, and the outer crimp component 220 is crimped to the inner crimp component 210. The tensile elements 12 are clamped between the inner crimp component 210 and the outer crimp component 220 in order to fixedly couple the tensile elements 12 to the plug connector 20.

As shown in Figure 4, the inner crimp component 210 is configured as a tube to receive the optical cable 10 such that the cable jacket 13 is surrounded by the inner crimp component 210. The outer crimp component 220 is configured as a hollow body to receive the inner crimp component 210. The inner crimp component 210 has a front face 211 at which the tensile elements 12 protrude out of the cable jacket 13 and the inner crimp component 210. A free space 290 is provided between the front face 211 of the inner crimp component 210 and the outer crimp component. The configuration enables the tensile elements 12 to move in the free space 290, when the optical cable 10 is bent.

As shown in Figure 4, the tensile elements 13 are folded back around the front face 211 of the inner crimp component 210 so that they do not abut on an inner wall 221 of the outer crimp component 220. The free space 290 between the front face 211 of the inner crimp component 210 and the inner wall 221 of the outer crimp component 220 allows the tensile elements 12 to leave the cable jacket 13 and to enter the free space 290 when the optical cable 10 is bent behind the plug connector 20.

The possibility for the tensile elements 12 to move in the free space 290 of the tensile element securing component 21 allows that the coupling of the optical cable and the plug connector is nearly not influenced by any movement of the optical cable, for example a bending of the optical cable against the preferential bending direction. The position of the optical waveguide 110 is not changed within the plug connector. Furthermore, the decoupling allows that the plug connector 20 is not bent, when the optical cable 10 is bent.

The tensile elements 12 are folded back around the front face 211 of the inner crimp component 210 and are arranged on an outer surface of the inner crimp component 210. As illustrated in Figure 4, the tensile elements 12 protrude out of the outer crimp component 210 at the back side of the outer crimp component 220.

The front face 211 of the inner crimp component 210 narrows at the front side at which the tensile elements 12 protrude out of the inner crimp component 210 to form an abutment means 212 inside the tube of the inner crimp component 210. The cable is arranged in the tube of the inner crimp component 210 until the cable jacket 13 abuts on the abutment means 212. The abutment means 212 functions as a stop means that prevents the cable jacket from protruding out of the front face 211 of the inner crimp component 210. As shown in Figure 5B, the tensile elements 12 are crimped on the outer surface of the inner crimp component 210 by the outer crimp component 220 being crimped on the inner crimp component 210.

The inner crimp component 210 has a first portion 210a and a second portion 210b. The first portion 210a of the inner crimp component 210 is encased by the outer crimp component 220. The second portion 210b of the inner crimp component 210 protrudes out of the outer crimp component 220 at an end of the outer crimp component, i.e. at the back side of the outer crimp component 220, at which the first portion 210a of the inner crimp component 210 enters the outer crimp component 220. As further shown in Figures 4A to 5B, the second portion 210b of the inner crimp component 210 comprises a clamping part 213 being configured to fix the cable 10 to the inner crimp component 210 by clamping the cable jacket 13.

The first portion 210a of the inner crimp component 210 is arranged within the hollow body of the outer crimp component 220 such that the space 290 is provided between the front face 211 of the inner crimp component 210 and an inner wall 221 of the outer crimp component 220.Especially, when the cable 10 is bent against the preferential bending direction, i.e. the cable is bent in a plane in which the tensile elements are arranged, the tensile elements 12 having the larger bending radius are drawn back in the cable jacket 13 and the tensile elements 12 having the smaller bending radius are drawn out of the cable jacket 13. The tensile elements 12 that are moved out of the cable jacket 13 then move in the free space 290. The free space 290 between the front face 211 of the inner crimp component and the inner wall 221 of the outer crimp component allows that the movement of the tensile elements 12 in the cable jacket 13 do not affect the spatial arrangement of the optical cable 10 inside the plug connector 20. The free space 290 rather allows the tensile elements 12 to extend and move out of the cable jacket 13 when the cable is bent against the preferential bending direction without any influence on the demarcation point between the plug connector 20 and the cable 10.

As shown in Figure 4, the first portion 210a of the inner crimp component 210 comprises a shoulder 215 being arranged on the outer surface of the first portion 210a of the inner crimp component 210. The shoulder 215 of the first portion 210a of the inner crimp component 210 abuts on the outer crimp body 220 to arrange the first portion 210a of the inner crimp component 210 spaced apart from the inner wall 221 of the outer crimp component 220.

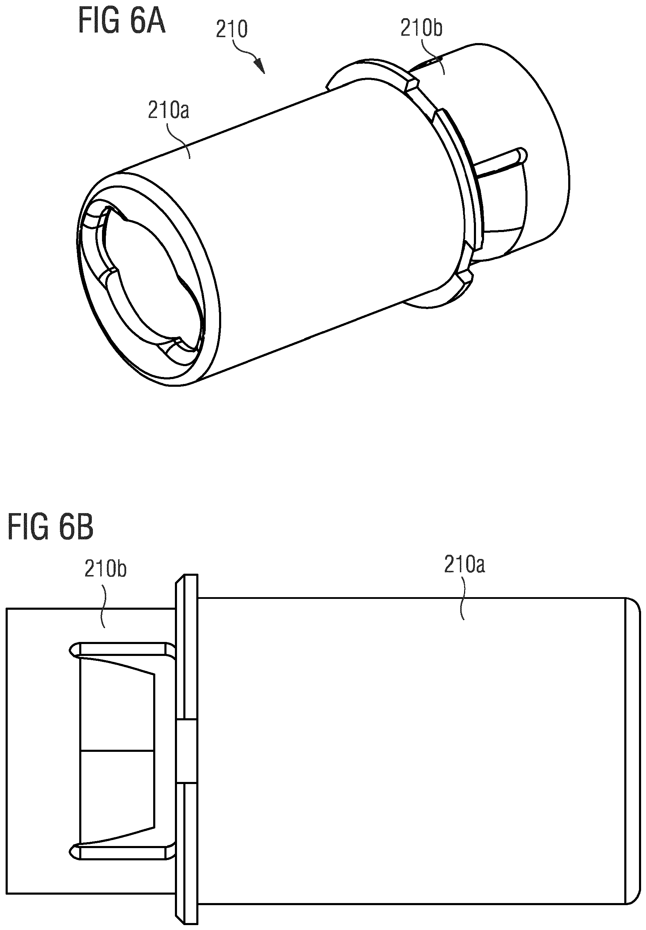

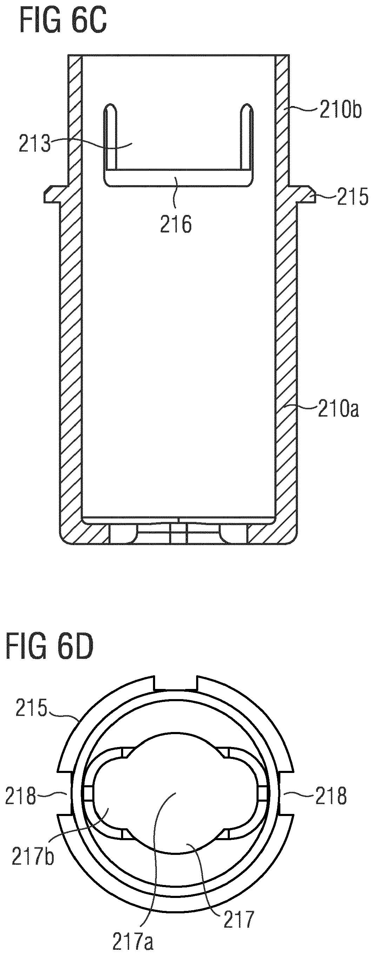

Figure 6A shows a perspective view of the inner crimp component 210, and Figures 6B to 6D show cross-sectional views of the inner crimp component 210 from different directions. Figure 6C shows the first portion 210a of the inner crimp component 210 with the shoulder 215 that functions as an abutment means when the inner crimp component 210 is inserted in the outer crimp component 220. Figure 6C also shows the clamping part 213 that is formed in the second portion 210b of the inner crimp component 210 by slots 216 being arranged in the second portion 210b of the inner crimp component 210.

Figure 6D shows the tube 217 of the first portion 210a of the inner crimp component having a rounded central section 217a to receive the optical transmission element 11 and two bulk sections 217b being arranged on the left and right side of the rounded central section 217a of the tube 217. The optical transmission element 11 is arranged in the central section 217a and the tensile elements 12 are arranged in the bulk section 217b of the tube 217 of the inner crimp component 210. Figure 6D further shows gaps 218 being arranged in the shoulder 215. The tensile elements are guided through the gaps 218 of the shoulder 215, as shown in Figure 5 B.

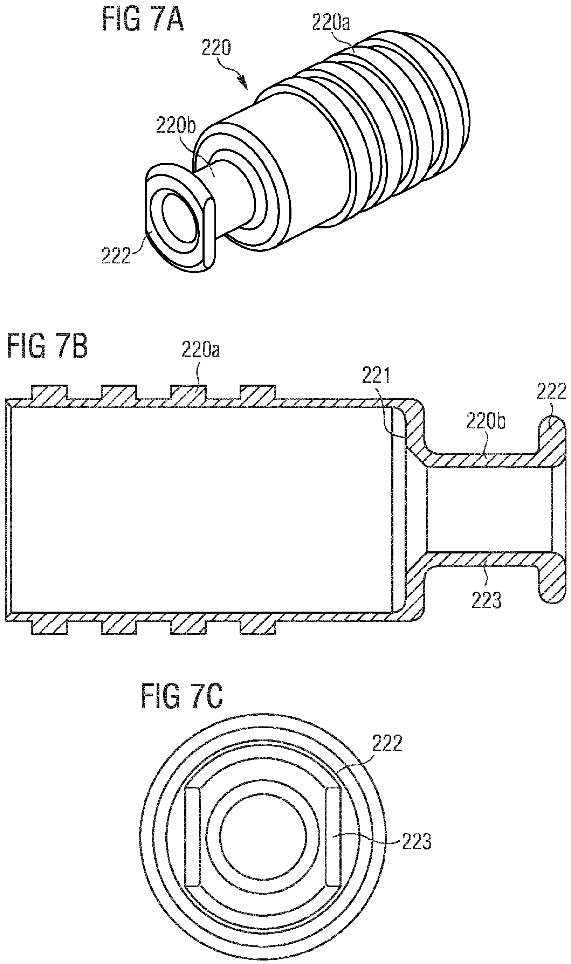

Figure 7A shows a perspective view of the outer crimp component 220. Figure 7B and Figure 7C respectively show a cross-section of the outer crimp component 220 from different views. The outer crimp component 220 comprises a first portion 220a and a second portion 220b. The first portion 210a of the inner crimp component 210 is arranged within the first portion 220a of the inner crimp component 220, as shown in Figure 4. The second portion 220b of the outer crimp component 220 comprises a flange 222 to secure the tensile element securing component 21 in the cable clamping portion 232 of the crimp body 23, as shown in Figures 2A to 2C.

As shown in Figures 7B and 7C, the first and the second portion 220a, 220b of the outer crimp component 220 are respectively configured as a tube. The hollow body of the second portion 220b of the outer crimp component 220 has an inner diameter being smaller than the inner diameter of the hollow body of the first portion 220a of the outer crimp component 220. The inner wall 221 of the outer crimp component 220 is arranged at the passage from the hollow body of the first portion 220a of the outer crimp component 220 to the hollow body of the second portion 220b of the outer crimp component. As shown in Figure 4, the hollow body of the second portion 220b of the outer crimp component 220 is configured to receive the optical transmission element 11.

As shown in Figures 4 to 5D with reference to Figures 2A to 2C, the optical waveguide 110 protrudes out of the second portion 220b of the outer crimp component 220 and is arranged in the longitudinal passageway 231 of the crimp body 23. The flange 222 of the outer crimp component 220 is arranged at an end of the second portion 220b of the outer crimp component 220. The flange 222 is arranged in the cable clamping portion 232 of the crimp body 23 to secure the tensile element securing component 21 in the cable clamping portion 232 of the crimp body 23. The flange 222 may comprise a flattened section 223 that allows to arrange the tensile element securing component 21 in a defined direction in the cable clamping portion 233 of the crimp body 23. A section 223 of the second portion 220b of the outer crimp component 220 between the flange 22 and the first portion 220a of the outer crimp component 220 has an outer diameter being smaller than the outer diameter of the first portion 220a of the outer crimp component 220.

Figures 8A and 8B show an exploded view of the preconnectorized optical cable 1 comprising the optical cable 10 and the plug connector 20. Figure 8A shows the tensile element securing component 21 before crimping and Figure 8B shows the tensile element securing component 21 after crimping to secure the tensile elements 12 to the optical connector 20.

A front portion/end of the optical cable 10 is stripped by removing the jacket 13. In order to terminate the front end of the optical cable 10 with the plug connector 20, the inner crimp component 210 is put onto the stripped optical cable 10, i.e. onto the optical transmission element 11 and the tensile elements 12. The second portion 210b of the inner crimp component 210 is slid over the cable jacket 13. The clamping part 213 is crimped to clamp the end of the optical cable to the inner crimp component 210 of the tensile element securing component 21.

The tensile elements 12 protrude out of the front face of the inner crimp component 210 and are folded back to be arranged on the outer surface of the inner crimp component 210. Then, the outer crimp component 220 is put onto the inner crimp component 210 and the tensile elements 12 are guided into the gaps 218 provided in the shoulder 215, as shown in Figure 6D.

In order to secure the tensile elements 12 to the tensile element securing component 21, the outer crimp component 220 is crimped by a crimping tool to the inner crimp component 210. After crimping, the optical transmission element 11 is cut flush with the outer crimp component 220 and the connector assembly 24 is glued to the optical waveguide/fiber 110. The connector assembly 24 comprises a ferrule 241 in which the optical waveguide 110 is arranged. The assembly is then put into the shells 230a, 230b of the crimp body 23. A crimp band 22 is slid over the shells 230a and 230b. By crimping the crimp band 22, the shells 230a and 230b are held together to form the crimp body 23.

The tensile elements 12 may be configured as metal wires. The connector assembly 24 may be configured as an SC connector, as shown in Figures 8A and 8B, but it is also possible to use other types of connector assemblies such LC, FC, ST, MT, and MT-RJ type connectors. In a final step, a housing 25 is slid over the tensile element securing component 21 and a shrink tube 253 is attached and heat-shrunk to a connector boot 252. The connector boot 252 is arranged over a shroud 251 of the housing 25.

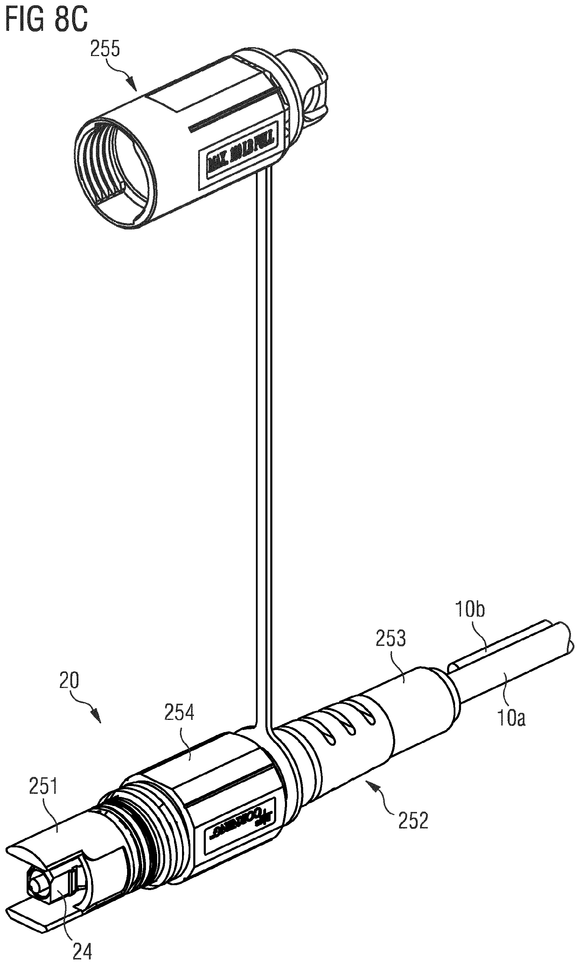

Figure 8C shows the complete plug connector 20 terminating the optical cable 10. The connector assembly 24 protrudes out of the shroud 251. Figure 8C further shows the connector boot 252, the shrink tube 253, a coupling nut 254 and a protective/dust cap 255 of the plug connector. The coupling nut 254 is configured such that the plug connector 20 may be screwed to a receptacle.

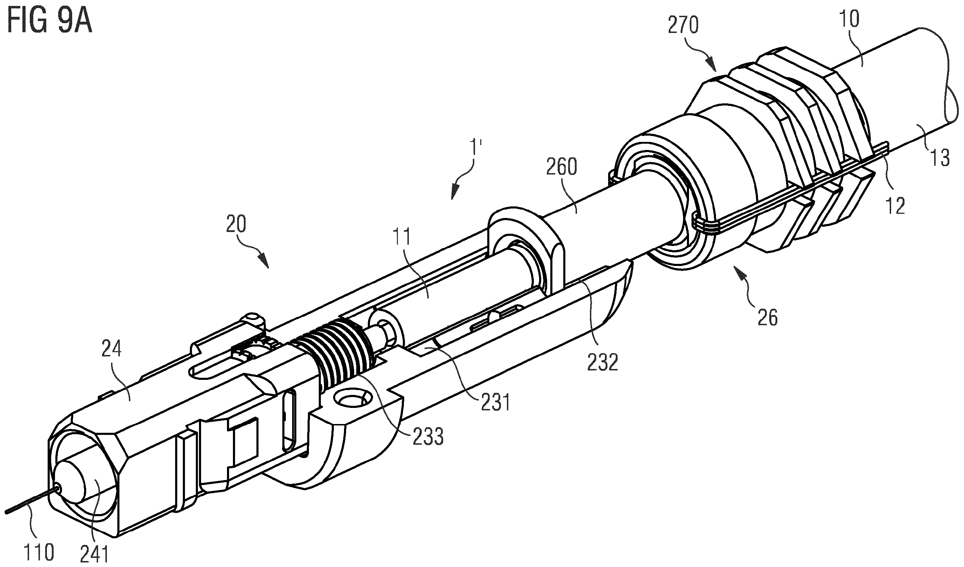

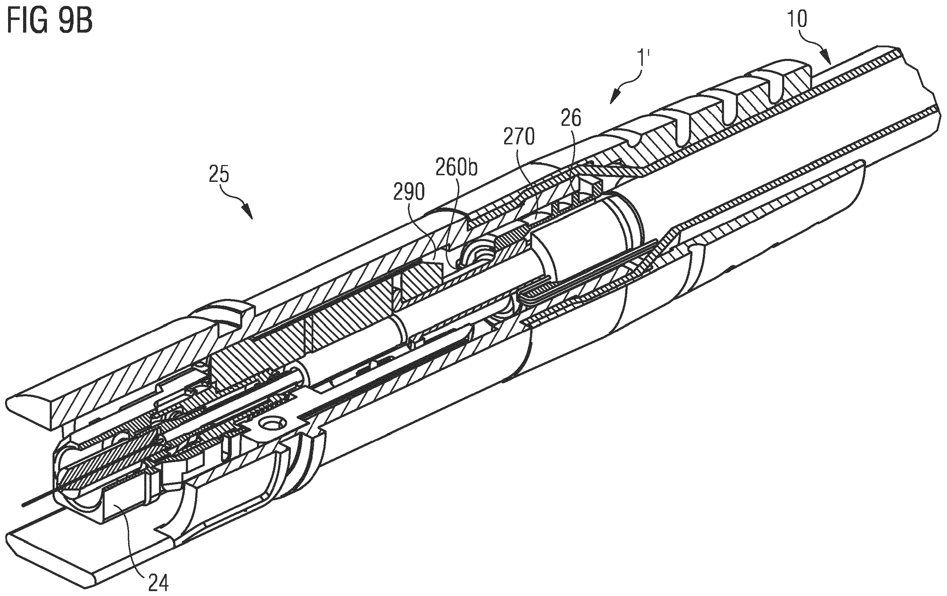

Figures 9 to 13 show components of a preconnectorized optical cable that does not form part of the claims, wherein tensile elements 12 of the optical cable 10 are secured in a plug connector terminating the optical cable in an efficient and reliable manner. The optical cable 10 is configured as shown in Figure 1. In particular, the optical cable 10 comprises an optical transmission element 11 including at least one optical waveguide 110. The optical transmission element 11 is surrounded by a cable jacket 13 in which the tensile elements 12 are embedded.

Figure 9A shows a perspective view of a preconnectorized optical cable 1' comprising the optical cable 10 being terminated by the plug connector 20. The plug connector 20 is attached to an end section of the cable 10, thereby connectorizing the at least one optical waveguide 110. The plug connector 20 comprises a tensile element securing component 26 for securing the tensile elements 12 of the optical cable 10. The tensile element securing component 26 comprises an inner component 260 and an outer component 270. The tensile elements 12 are secured on the outer surface of the outer component 270 of the tensile element securing component 26. The plug connector 20 comprises a connector assembly 24 for securing the at least one optical waveguide 110 of the optical cable 1' and a crimp body 23 having a longitudinal passageway 231 for passing the optical transmission element 11. Regarding the crimp body 23, Figure 9B shows a quarter cut view of the preconnectorized optical cable 1 shown in Figure 9A.

Figure 9A only shows one of the shells 230a of the crimp body 23. The crimp body 23/the shell 230a of the crimp body 23 comprises a cable clamping portion 232 and a connector assembly clamping portion 233. The cable clamping portion 232 is formed to secure the tensile element securing component 26. The connector assembly clamping portion 233 is configured to secure the connector assembly 24.

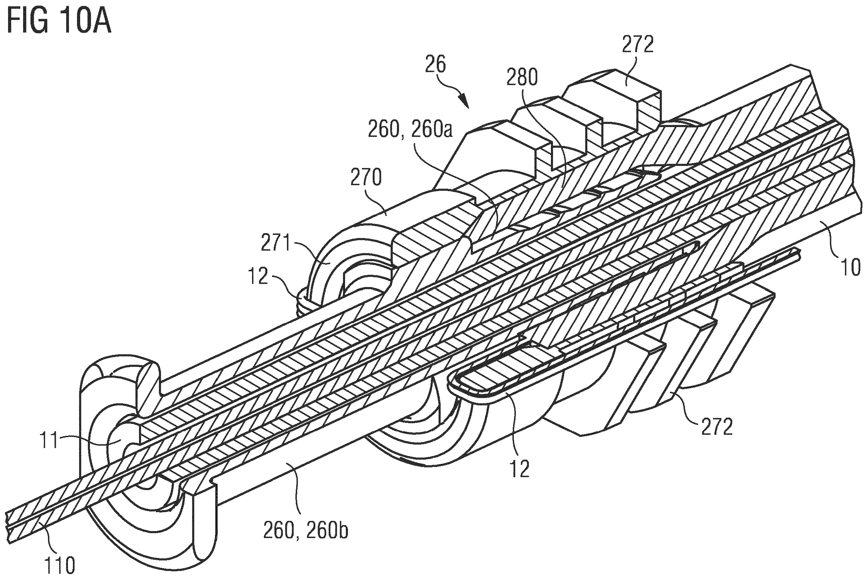

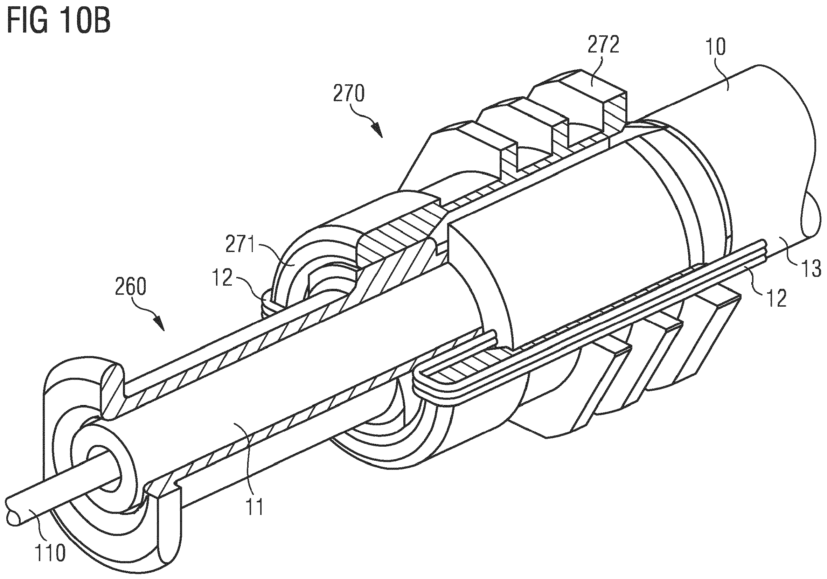

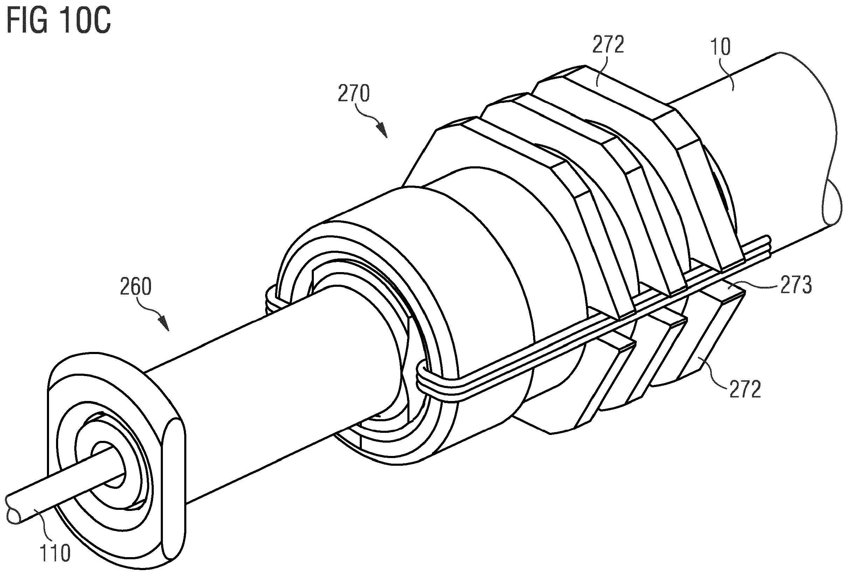

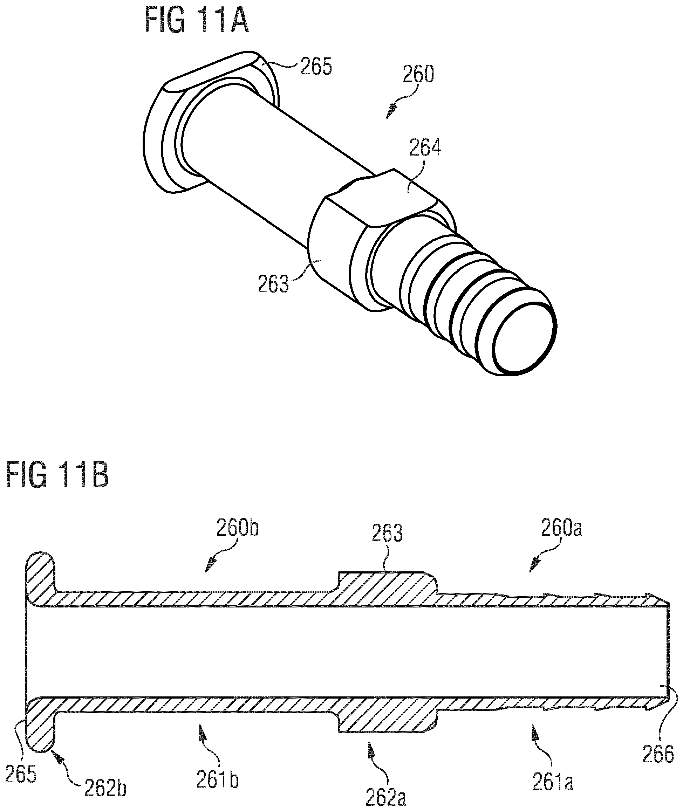

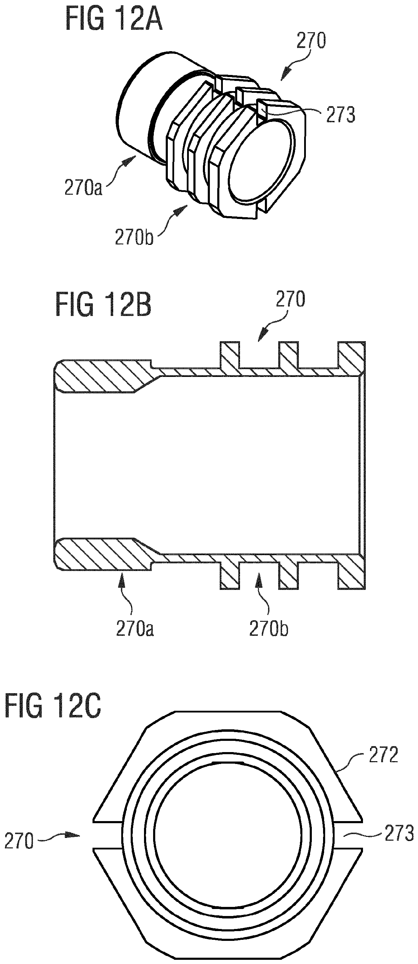

The configuration of the tensile element securing component 26 is described in the following with reference to Figures 10A to 10C together with the Figures 11A and 11B as well as Figures 12A to 12C. Figures 10A and 10B show a quarter cut of the preconnectorized optical cable, wherein the optical cable 10 is arranged in the tensile element securing component 26. The tensile elements 12 of the optical cable 10 are secured on an outer surface of the tensile element securing component 26, as shown in Figure 10C

As shown in Figures 10A and 10B, the tensile element securing component 26 is arranged such that a gap 280 is provided between the inner and outer component 260 and 270 of the tensile element securing component 26. In the mated configuration of the optical cable 10 and the plug connector 20, the tensile elements 12 are arranged in the gap 280 between the inner and outer component 260, 270 of the tensile element securing component 26.

The tensile elements 12 protrude out of a front face 271 of the outer component 270 of the tensile element securing component 26. The tensile elements 12 are folded back around the front face 271 and are arranged on the outer surface of the outer component 270 of the tensile element securing component. In order to fix the tensile elements 12 on the outer surface of the tensile element securing component 26, the tensile elements 12 are crimped on the outer surface of the outer component 270 of the tensile element securing component 26.

As shown in Figure 10C, the outer surface of the outer component 270 of the tensile element securing component comprises some ridges 272 being arranged on the outer surface of the outer crimp component behind each other and spaced apart from each other. Each of the ridges has a gap 273 for inserting the tensile elements 12. The gaps 273 of the ridges are aligned so that the tensile elements 12 can be arranged in the gaps 273 of the ridges 272. In order to secure the tensile elements 12 on the outer surface of the outer component 270 of the tensile element securing component 26, the ridges 272 are crimped together.

Figure 11A shows a perspective view of an inner component 260 of the tensile element securing component 26 and Figure 11B shows a cross-sectional view of the inner component 260 of the tensile element securing component 26. The inner component 260 of the tensile element securing component 26 has a first portion 260a and a second portion 260b. As shown in Figures 10A and 10B, the first portion 260a of the tensile element securing component 26 is arranged within the outer component 270 of the tensile element securing component 26. The second portion 260b of the tensile element securing component 26 protrudes out of the outer component 270 of the tensile element securing component 26 at the front face 271 of the outer component. The inner component 260 of the tensile element securing component 26 is configured as a tube. The optical transmission element 11 is arranged within the tube of the first and second portion 260a, 260b of the inner component 260 of the tensile element securing component 26.

As shown in Figures 11A and 11B, a first portion 260a of the inner component 260 has a first section 261a and a second section 262a. The first section 261a, i.e. the wall of the first section 261a of the first portion 260a of the inner component 260 is arranged or pushed in an area of the cable 10 between the optical transmission element 11 and the cable jacket 13. After being inserted in the cable 10, the tensile elements 12 and the cable jacket 13 are arranged in the gap 280 between the inner component 260 and the outer component 270 of the tensile element securing component 26 and the optical transmission element 11 is arranged in the tube 266 of the inner component 260 of the tensile element securing component 26.

As shown in Figures 10A, 10B and 11A, 11B, the second section 262a of the first portion 260a of the inner component 260 of the tensile element securing component 26 has an outer diameter being larger than the outer diameter of the first section 261a of the first portion 260a of the inner component 260 of the tensile element securing component 26. The second section 262a of the first portion 260a of the inner component 260 of the tensile element securing component 26 is configured as a flange 263. The first section 261a of the first portion 260a of the inner component of the tensile element securing component 26 is pushed in the cable 10 until the cable jacket 13 abuts on the flange 263. The flange 263 functions as a stop means so that the optical cable 10 can only be inserted in the tensile element securing component 26 until a defined position is reached.

According to the configuration of the tensile element securing component 26, as shown in Figures 10A, 10B and 11A, the flange 263 may comprises at least one flattened section 264. In the mounted configuration of Figures 10A to 10C, the tensile elements 13 are arranged in the flattened section 264 and protrude out of the first portion 260a of the inner component 260 of the tensile element securing component 26 at the flattened section 264 of the flange 263.

As shown in Figures 11A and 11B, the second portion 260b of the inner component 260 of the tensile element securing component 26 has a first section 261b and a second section 262b. The second section 262b is configured as a flange 265. The flange 265 is located at a front side of the second portion 260b of the inner component 260 of the tensile element securing component 26. The first section 261b of the second portion 260b of the inner component 260 of the tensile element securing component is arranged between the flange 263 and the flange 265. As shown in Figure 9A, the flange 265 is arranged in the cable clamping portion 232 of the crimp body 23 to secure the tensile element securing component 26 in the cable clamping portion 232 of the crimp body 23. Each of the shells 230a, 230b have a respective cavity in their cable clamping portion in which the flange 265 is placed.

Figure 12A shows a perspective view of the outer component 270 of the tensile element securing component 26. Figures 12B and 12C show different cross-sectional views of the outer component 270 of the tensile element securing component 26. As shown in Figure 12B, the outer component 270 of the tensile element securing component 26 has a first portion 270a and a second portion 270b.

Referring to Figures 10A and 10B, the second section 262a of the first portion 260a of the inner component 260 of the tensile element securing component is encased by the first portion 270a of the outer component 270 of the tensile element securing component. The first section 261a of the first portion 260a of the inner component 260 of the tensile element securing component 26 is encased by the second portion 270b of the outer component 270 of the tensile element securing component. The tensile elements 12 are arranged on the outer surface of the first portion 270a of the outer component 270 of the tensile element securing component 26. In particular, the tensile elements 12 are crimped on the outer surface of the second portion 270b of the outer component 270 of the tensile element securing component 26. The ridges 272 with the gaps 273 in which the tensile elements 12 are arranged before crimping are shown in Figure 12C

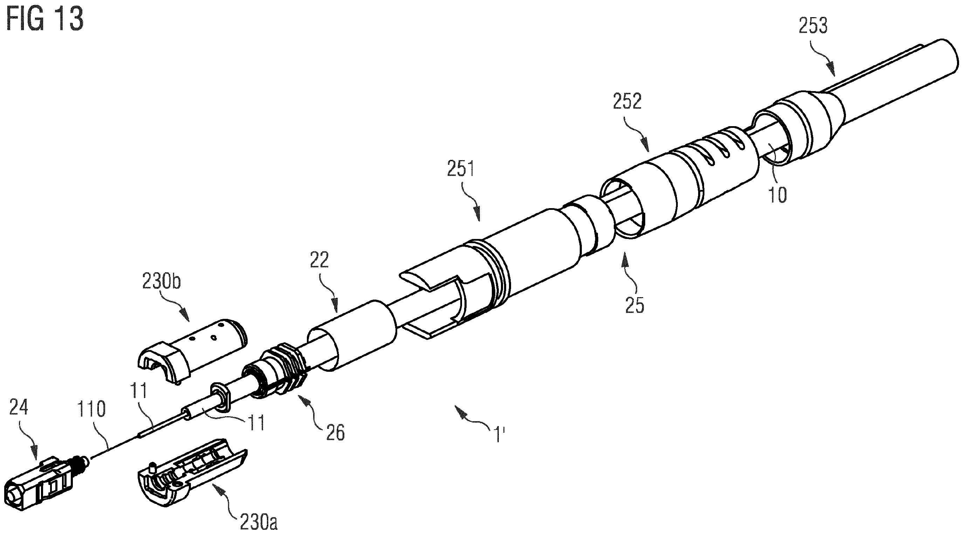

Figure 13 shows an exploded view of the preconnectorized optical cable 1'. The inner and the outer component 260, 270 of the tensile element securing component 26 may be mechanically fixed by a press fit connection. In order to terminate the plug connector 20 with the optical cable 10 the tensile element securing component is pushed in the material of the optical cable such that the thin wall of the first section 261a of the first portion 260a of the inner component 260 of the tensile element securing component 26 penetrates in an area of the optical cable 10 between the optical transmission element 11 and the cable jacket 13.

After having terminated the optical cable 10 with the tensile element securing component 26, the cable jacket 13 and the tensile elements 12 embedded in the jacket 13 are arranged in the gap 280 between the inner component 260 and the outer component 270 of the tensile element securing component 26. The optical transmission element 11 is arranged in the tube 266 of the inner component 260 of the tensile element securing component 26.

In a next step, tensile elements 12 protruding out of the front face 271 of the outer component 270 are folded back and placed in the respective gap 273 of the ridges 272 on the outer surface of the outer component 270 of the tensile element securing component. The ridges 272 are crimped so that the tensile elements 12 are secured to the tensile element securing component 26.

In a next step the connector assembly 24 is glued to the optical waveguide/fiber 110 so that the optical waveguide/fiber 110 is arranged in a ferrule 241 of the connector assembly 24, as shown in Figure 9A. The connector assembly 24 may be configured as a connector of the SC type. The connector assembly 24 may have another design, for example it may be configured as an LC, FC, ST, MT, or MT-RJ connector.

The mounted assembly is put into the shells 230a and 230b of the crimp body 23 such that the tensile element securing component 26 is placed in the cable clamping portion 232 and the connector assembly 24 is placed in the connector assembly clamping portion 233. The optical waveguide 110 that protrudes out of the second portion 260b of the inner crimp component 260 is arranged in the longitudinal passageway 231 of the crimp body 23.

In order to fix the two shells 230a and 230b of the crimp body 23, the crimp band 22 is pushed over the shells 230a and 230b and crimped together. In a final step the connector housing 25 comprising the shroud 251 and the connector boot 252 are pushed over the crimp body 23. A shrink tube 253 is then attached and heat-shrunk to encapsulate the rearward end of the connector housing at the connector boot 252. The complete plug connector 20 further comprises the coupling nut 254 to fix the plug connector to a receptacle and the protective/dust cap 255, as shown in Figure 8C.

The preconnectorized optical cable 1' allows the tensile elements 12 to be efficiently and reliably secured to the tensile element securing component 26 and thus to the plug connector 20. When bending the cable 10 against the preferential bending direction, the tensile elements 12 can be moved out of the cable jacket 13 in a free space 290, illustrated in Figure 9B, between the second portion 260b of the inner component 260 of the tensile element securing component 26 and the housing 25 of the plug connector.

In particular, the free movement of the tensile elements 12 in the free space 290 allows the spatial arrangement of the components of the optical cable 10, particularly the optical waveguide, and the components of the plug connector 20 to be almost unaffected by the bending of the optical cable 10. As well as the preconnectorized optical cable 1, also the the preconnectorized optical cable 1' allows the tensile elements 12 to move out of the cable jacket 13 when the cable is bent against the preferential bending direction without any influence on the demarcation between plug connector 20 and the optical cable 10.

### List of Reference Signs

- 1,1': preconnectorized optical cable
- 10: optical cable
- 11: optical transmission element
- 12: tensile elements
- 13: cable jacket
- 14: web
- 20: plug connector
- 21: tensile element securing component
- 22: crimp band
- 23: crimp body
- 24: connector assembly
- 25: connector housing
- 26: tensile element securing component
- 210: inner crimp component
- 220: outer crimp component
- 231: longitudinal passageway
- 232: cable clamping portion
- 233: connector assembly clamping portion
- 241: ferrule
- 251: shroud
- 252: connector boot
- 253: heat shrink tube
- 260: inner component
- 270: outer component
- 280: gap
- 290: free space

## Claims

1. A preconnectorized optical cable, comprising:
- an optical cable (10) having an optical transmission element (11) comprising at least one optical waveguide (110), a plurality of tensile elements (12), and a cable jacket (13); and
- a plug connector (20), the plug connector (20) being attached to an end section of the cable (10), thereby connectorizing the at least one optical waveguide (110), the plug connector (20) comprising:
- a tensile element securing component (21) for securing the tensile elements (12), the tensile element securing component (21) comprising an inner crimp component (210) and an outer crimp component (220),
- a connector assembly (24) for securing the at least one optical waveguide (110),
and
- a crimp body (23) having a longitudinal passageway (231) for passing the optical transmission element (11) therethrough, a cable clamping portion (232), and a connector assembly clamping portion (233), wherein the cable clamping portion (232) secures the tensile element securing component (21), and the connector assembly clamping portion (233) secures the connector assembly (24),
- wherein the inner crimp component (210) has a front face (211) at which the tensile elements (12) protrude out of the cable jacket (13) and the inner crimp component (210),
- wherein a free space (290) is provided between the front face (211) of the inner crimp component (210) and the outer crimp component to enable the tensile elements (12) to move in the free space (290), when the optical cable (10) is bent,
- wherein the inner crimp component (210) is configured as a tube to receive the optical cable (10) such that the cable jacket (13) is surrounded by the inner crimp component (210) and the outer crimp component (220) is configured as a hollow body to receive the inner crimp component (210),
- wherein the tensile elements (12) protrude out of the cable jacket (13) and the inner crimp component (210) and are folded back around the front face (211) of the inner crimp component and are arranged on an outer surface of the inner crimp body (210),
- wherein the front face (211) of the inner crimp component (210) narrows to form an abutment means (212) inside the tube of the inner crimp component (210), wherein the cable is arranged in the tube of the inner crimp component (210) until the cable jacket (13) abuts on the abutment means (212),
- wherein the tensile elements (12) are crimped on the outer surface of the inner crimp component (210) by the outer crimp component (220) being crimped on the inner crimp component (210),
- wherein the inner crimp component (210) comprises a first portion (210a) and a second portion (210b),
- wherein the outer crimp component (220) comprises a first portion (220a) and a second portion (220b), and
- wherein the first portion (210a) of the inner crimp component (210) is arranged within the first portion (220a) of the outer crimp component (220),
- wherein the second portion (220b) of the outer crimp component (220) comprises a flange (222) to secure the tensile element securing component (21) in the cable clamping portion (232) of the crimp body (23).

2. The preconnectorized optical cable of claim 1,
wherein the tensile elements (12) are secured between the inner crimp component (210) and the outer crimp component (220) being crimped to the inner crimp component (210).

3. The preconnectorized optical cable of claim 1 or 2,
- wherein the first portion (210a) of the inner crimp component (210) is encased by the outer crimp component (220),
- wherein the second portion (210b) of the inner crimp component (210) protrudes out of the outer crimp component (220) at an end of the outer crimp component at which the first portion (210a) of the inner crimp component enters the outer crimp component (220).

4. The preconnectorized optical cable of claim 3,
wherein the second portion (210b) of the inner crimp component (210) comprises a clamping part (213) being configured to fix the cable (10) to the inner crimp component (210) by clamping the cable jacket (13).

5. The preconnectorized optical cable of claim 3 or 4,
wherein the first portion (210a) of the inner crimp component (210) is arranged within the hollow body of the outer crimp component (220) such that the space (290) is provided between the front face (211) of the inner crimp component (210) and an inner wall (221) of the outer crimp component (220).

6. The preconnectorized optical cable of any one of claims 1 to 5,
- wherein the first portion (210a) of the inner crimp component (210) comprises a shoulder (215) being arranged on the outer surface of the first portion (210a) of the inner crimp component (210),
- wherein the shoulder (215) of the first portion (210a) of the inner crimp component (210) abuts on the outer crimp component (220) to arrange the first portion (210a) of the inner crimp component (210) spaced apart from the inner wall (221) of the outer crimp component (220).

7. The preconnectorized optical cable of claim 5 or 6,
- wherein the first and the second portion (220a, 220b) of the outer crimp component (220) are respectively configured as a tube,
- wherein the tube of the first portion (220a) of the outer crimp component (220) has an inner diameter and the tube of the second portion (220b) of the outer crimp component (220) has an inner diameter being smaller than the inner diameter of the tube of the first portion (220a) of the outer crimp component (220,
- wherein the inner wall (221) of the outer crimp component (220) is arranged at the passage from the tube of the first portion (220a) of the outer crimp component (220) to the tube of the second portion (220b) of the outer crimp component (220),
- wherein the tube of the second portion (220b) of the outer crimp component (220) is configured to receive the optical transmission element (11).

8. The preconnectorized optical cable of any one of claims 1 to 7,
wherein the at least one optical waveguide (110) protrudes out of the second portion (220b) of the outer crimp component (220) and is arranged in the longitudinal passageway (231) of the crimp body (23).

9. The preconnectorized optical cable of any one of claims 1 to 8,
wherein the flange (222) of the outer crimp component (220) is arranged at an end of the second portion (220b) of the outer crimp component (220), wherein the flange (222) is arranged in the cable clamping portion (232) of the crimp body (23) to secure the tensile element securing component (21) in the cable clamping portion (232) of the crimp body (23).

10. The preconnectorized optical cable of any one of claims 1 to 9, comprising:
- a crimp band (22),
- wherein the crimp body (23) comprises a first shell (230a) and a second shell (230b) being helt together by means of the crimp band (22) that is arranged around the first and the second shell (230a, 230b) of the crimp housing (23).

11. The preconnectorized optical cable of any one of claims 1 to 10,
wherein the tensile elements (12) are metal wires.

## Patentansprüche

1. Vorkonfektioniertes optisches Kabel, aufweisend:
- ein optisches Kabel (10) mit einem optischen Übertragungselement (11), das mindestens einen optischen Wellenleiter (110) aufweist, einer Mehrzahl von Zugelementen (12) und einem Kabelmantel (13); und
- einen Steckverbinder (20), wobei der Steckverbinder (20) an einem Endstück des Kabels (10) angebracht ist, wodurch der mindestens eine optische Wellenleiter (110) konfektioniert wird, wobei der Steckverbinder (20) aufweist:
- ein Zugelement-Sicherungsbauteil (21) zum Sichern der Zugelemente (12), wobei das Zugelement-Sicherungsbauteil (21) ein inneres Quetschbauteil (210) und ein äußeres Quetschbauteil (220) aufweist,
- eine Steckeranordnung (24) zum Sichern des mindestens einen optischen Wellenleiters (110), und
- einen Quetschkörper (23) mit einem Längsdurchgang (231), um das optische Übertragungselement (11) durch ihn hindurchzuführen, einem Kabelklemmabschnitt (232) und einem Steckeranordnungs-Klemmabschnitt (233), wobei der Kabelklemmabschnitt (232) das Zugelement-Sicherungsbauteil (21) und der Steckeranordnungs-Klemmabschnitt (233) die Steckeranordnung (24) sichert,
- wobei das innere Quetschbauteil (210) eine Stirnfläche (211) aufweist, an der die Zugelemente (12) aus dem Kabelmantel (13) und dem inneren Quetschbauteil (210) herausragen,
- wobei ein freier Raum (290) zwischen der Stirnfläche (211) des inneren Quetschbauteils (210) und dem äußeren Quetschbauteil vorgesehen ist, damit sich die Zugelemente (12) in dem freien Raum (290) bewegen können, wenn das optische Kabel (10) gebogen wird,
- wobei das innere Quetschbauteil (210) als Rohr ausgeführt ist, um das optische Kabel (10) so aufzunehmen, dass der Kabelmantel (13) vom inneren Quetschbauteil (210) umgeben ist, und das äußere Quetschbauteil (220) als Hohlkörper ausgeführt ist, um das innere Quetschbauteil (210) aufzunehmen,
- wobei die Zugelemente (12) aus dem Kabelmantel (13) und dem inneren Quetschbauteil (210) herausragen und um die Stirnfläche (211) des inneren Quetschbauteils herum umgelegt und an einer Außenfläche des inneren Quetschkörpers (210) angeordnet sind,
- wobei die Stirnfläche (211) des inneren Quetschbauteils (210) verschmälert ist, um eine Anlageeinrichtung (212) im Inneren des Rohrs des inneren Quetschbauteils (210) zu bilden, wobei das Kabel im Rohr des inneren Quetschbauteils (210) angeordnet ist, bis sich der Kabelmantel (13) an der Anlageeinrichtung (212) abstützt,
- wobei die Zugelemente (12) an der Außenfläche des inneren Quetschbauteils (210) verquetscht sind, indem das äußere Quetschbauteil (220) am inneren Quetschbauteil (210) verquetscht wird,
- wobei das innere Quetschbauteil (210) einen ersten Abschnitt (210a) und einen zweiten Abschnitt (210b) aufweist,
- wobei das äußere Quetschbauteil (220) einen ersten Abschnitt (220a) und einen zweiten Abschnitt (220b) aufweist, und
- wobei der erste Abschnitt (210a) des inneren Quetschbauteils (210) innerhalb des ersten Abschnitts (220a) des äußeren Quetschbauteils (220) angeordnet ist,
- wobei der zweite Abschnitt (220b) des äußeren Quetschbauteils (220) einen Flansch (222) aufweist, um das Zugelement-Sicherungsbauteil (21) im Kabelklemmabschnitt (232) des Quetschkörpers (23) zu sichern.

2. Vorkonfektioniertes optisches Kabel nach Anspruch 1, wobei die Zugelemente (12) zwischen dem inneren Quetschbauteil (210) und dem äußeren Quetschbauteil (220) gesichert sind, indem sie am inneren Quetschbauteil (210) verquetscht sind.

3. Vorkonfektioniertes optisches Kabel nach Anspruch 1 oder 2,
- wobei der erste Abschnitt (210a) des inneren Quetschbauteils (210) vom äußeren Quetschbauteil (220) umschlossen ist,
- wobei der zweite Abschnitt (210b) des inneren Quetschbauteils (210) an einem Ende des äußeren Quetschbauteils, an dem der erste Abschnitt (210a) des inneren Quetschbauteils in das äußere Quetschbauteil (220) eintritt, aus dem äußeren Quetschbauteil (220) herausragt.

4. Vorkonfektioniertes optisches Kabel nach Anspruch 3, wobei der zweite Abschnitt (210b) des inneren Quetschbauteils (210) ein Klemmteil (213) aufweist, das dafür ausgelegt ist, das Kabel (10) am inneren Quetschbauteil (210) zu fixieren, indem es den Kabelmantel (13) klemmt.

5. Vorkonfektioniertes optisches Kabel nach Anspruch 3 oder 4,
wobei der erste Abschnitt (210a) des inneren Quetschbauteils (210) innerhalb des Hohlkörpers des äußeren Quetschbauteils (220) so angeordnet ist, dass der Raum (290) zwischen der Stirnfläche (211) des inneren Quetschbauteils (210) und einer Innenwand (221) des äußeren Quetschbauteils (220) vorgesehen ist.

6. Vorkonfektioniertes optisches Kabel nach einem der Ansprüche 1 bis 5,
- wobei der erste Abschnitt (210a) des inneren Quetschbauteils (210) eine Schulter (215) aufweist, die an der Außenfläche des ersten Abschnitts (210a) des inneren Quetschbauteils (210) angeordnet ist,
- wobei die Schulter (215) des ersten Abschnitts (210a) des inneren Quetschbauteils (210) am äußeren Quetschbauteil (220) anliegt, um den ersten Abschnitt (210a) des inneren Quetschbauteils (210) von der Innenwand (221) des äußeren Quetschbauteils (220) beabstandet anzuordnen.

7. Vorkonfektioniertes optisches Kabel nach Anspruch 5 oder 6,
- wobei der erste und zweite Abschnitt (220a, 220b) des äußeren Quetschbauteils (220) jeweils als Rohr ausgeführt sind,
- wobei das Rohr des ersten Abschnitts (220a) des äußeren Quetschbauteils (220) einen Innendurchmesser hat und das Rohr des zweiten Abschnitts (220b) des äußeren Quetschbauteils (220) einen Innendurchmesser hat, der kleiner als der Innendurchmesser des Rohrs des ersten Abschnitts (220a) des äußeren Quetschbauteils (220) ist,
- wobei die Innenwand (221) des äußeren Quetschbauteils (220) an dem Durchgang vom Rohr des ersten Abschnitts (220a) des äußeren Quetschbauteils (220) zum Rohr des zweiten Abschnitts (220b) des äußeren Quetschbauteils (220) angeordnet ist,
- wobei das Rohr des zweiten Abschnitts (220b) des äußeren Quetschbauteils (220) dafür ausgelegt ist, das optische Übertragungselement (11) aufzunehmen.

8. Vorkonfektioniertes optisches Kabel nach einem der Ansprüche 1 bis 7,
wobei der mindestens eine optische Wellenleiter (110) aus dem zweiten Abschnitt (220b) des äußeren Quetschbauteils (220) herausragt und im Längsdurchgang (231) des Quetschkörpers (23) angeordnet ist.

9. Vorkonfektioniertes optisches Kabel nach einem der Ansprüche 1 bis 8,
wobei der Flansch (222) des äußeren Quetschbauteils (220) an einem Ende des zweiten Abschnitts (220b) des äußeren Quetschbauteils (220) angeordnet ist, wobei der Flansch (222) im Kabelklemmabschnitt (232) des Quetschkörpers (23) angeordnet ist, um das Zugelement-Sicherungsbauteil (21) im Kabelklemmabschnitt (232) des Quetschkörpers (23) zu sichern.

10. Vorkonfektioniertes optisches Kabel nach einem der Ansprüche 1 bis 9, aufweisend:
- ein Quetschband (22),
- wobei der Quetschkörper (23) eine erste Gehäuseschale (230a) und eine zweite Gehäuseschale (230b) aufweist, die mittels des Quetschbandes (22) zusammengehalten sind, das um die erste und zweite Gehäuseschale (230a, 230b) des Quetschgehäuses (23) herum angeordnet ist.

11. Vorkonfektioniertes optisches Kabel nach einem der Ansprüche 1 bis 10,
wobei es sich bei den Zugelementen (12) um Metalldrähte handelt.

## Revendications

1. Câble optique préconnectorisé, comprenant :
- un câble optique (10) présentant un élément de transmission optique (1) comprenant au moins un guide d'onde optique (110), une pluralité d'éléments de traction (12), et une gaine de câble (13) ; et
- un connecteur mâle (20), le connecteur mâle (20) étant attaché à une section d'extrémité du câble (10), connectorisant ainsi l'au moins un guide d'onde optique (110), le connecteur mâle comprenant :
o un composant de fixation d'éléments de traction (21) destiné à fixer les éléments de traction (12), le composant de fixation d'éléments de traction (21) comprenant un composant de sertissage intérieur (210) et un composant de sertissage extérieur (220),
o un ensemble connecteur (24) destiné à fixer l'au moins un guide d'onde optique (110), et
o un corps de sertissage (23) présentant un passage longitudinal (231) destiné à faire passer l'élément de transmission optique (11) à travers lui, une partie de serrage de câble (232), et une partie de serrage d'ensemble connecteur (233), sachant que la partie de serrage de câble (232) fixe le composant de fixation d'éléments de traction (21), et la partie de serrage d'ensemble connecteur (233) fixe l'ensemble connecteur (24),
- sachant que le composant de sertissage intérieur (210) présente une face avant (211) au niveau de laquelle les éléments de traction (12) dépassent de la gaine de câble (13) et du composant de sertissage intérieur (210),
- sachant qu'un espace libre (290) est prévu entre la face avant (211) du composant de sertissage intérieur (210) et le composant de sertissage extérieur pour permettre aux éléments de traction (12) de se déplacer dans l'espace libre (290) lorsque le câble optique (10) est courbé,
- sachant que le composant de sertissage intérieur (210) est configuré comme tube pour recevoir le câble optique (10) de telle sorte que la gaine de câble (13) soit entourée par le composant de sertissage intérieur (210) et le composant de sertissage extérieur (220) est configuré comme corps creux pour recevoir le composant de sertissage intérieur (210),
- sachant que les éléments de traction (12) dépassent de la gaine de câble (13) et du composant de sertissage intérieur (210) et sont repliés autour de la face avant (211) du composant de sertissage intérieur et sont agencés sur une surface extérieure du corps de sertissage intérieur (210),
- sachant que la face avant (211) du composant de sertissage intérieur (210) se rétrécit pour former un moyen de butée (212) à l'intérieur du tube du composant de sertissage intérieur (210), sachant que le câble est agencé dans le tube du composant de sertissage intérieur (210) jusqu'à ce que la gaine de câble (13) bute sur le moyen de butée (212),
- sachant que les éléments de traction (12) sont sertis sur la surface extérieure du composant de sertissage intérieur (210) par le composant de sertissage extérieur (220) qui est serti sur le composant de sertissage intérieur (210),
- sachant que le composant de sertissage intérieur (210) comprend une première partie (210a) et une deuxième partie (210b),
- sachant que le composant de sertissage extérieur (220) comprend une première partie (220a) et une deuxième partie (220b), et
- sachant que la première partie (210a) du composant de sertissage intérieur (210) est agencée à l'intérieur de la première partie (220a) du composant de sertissage extérieur (220),
- sachant que la deuxième partie (220b) du composant de sertissage extérieur (220) comprend une bride (222) pour fixer le composant de fixation d'éléments de traction (21) dans la partie de serrage de câble (232) du corps de sertissage (23).

2. Le câble optique préconnectorisé de la revendication 1,
sachant que les éléments de traction (12) sont fixés entre le composant de sertissage intérieur (210) et le composant de sertissage extérieur (220) qui est serti sur le composant de sertissage intérieur (210).

3. Le câble optique préconnectorisé de la revendication 1 ou 2,
- sachant que la première partie (210a) du composant de sertissage intérieur (210) est entourée par le composant de sertissage extérieur (220),
- sachant que la deuxième partie (210b) du composant de sertissage intérieur (210) dépasse du composant de sertissage extérieur (220) à une extrémité du composant de sertissage extérieur au niveau de laquelle la première partie (210a) du composant de sertissage intérieur entre dans le composant de sertissage extérieur (220).

4. Le câble optique préconnectorisé de la revendication 3,
sachant que la deuxième partie (210b) du composant de sertissage intérieur (210) comprend une partie de serrage (213) qui est configurée pour fixer le câble (10) au composant de sertissage intérieur (210) en serrant la gaine de câble (13).

5. Le câble optique préconnectorisé de la revendication 3 ou 4,
sachant que la première partie (210a) du composant de sertissage intérieur (210) est agencée à l'intérieur du corps creux du composant de sertissage extérieur (220) de telle sorte que l'espace (290) soit prévu entre la face avant (211) du composant de sertissage intérieur (210) et une paroi intérieure (221) du composant de sertissage extérieur (220).

6. Le câble optique préconnectorisé de l'une quelconque des revendications 1 à 5,
- sachant que la première partie (210a) du composant de sertissage intérieur (210) comprend un épaulement (215) qui est agencé sur la surface extérieure de la première partie (210a) du composant de sertissage intérieur (210),
- sachant que l'épaulement (215) de la première partie (210a) du composant de sertissage intérieur (210) bute sur le composant de sertissage extérieur (220) pour agencer la première partie (210a) du composant de sertissage intérieur (210) de manière espacée de la paroi intérieure (221) du composant de sertissage extérieur (220).

7. Le câble optique préconnectorisé de la revendication 5 ou 6,
- sachant que la première et la deuxième partie (220a, 220b) du composant de sertissage extérieur (220) sont configurées respectivement comme tube,
- sachant que le tube de la première partie (220a) du composant de sertissage extérieur (220) a un diamètre intérieur et le tube de la deuxième partie (220b) du composant de sertissage extérieur (220) a un diamètre intérieur qui est plus petit que le diamètre intérieur du tube de la première partie (220a) du composant de sertissage extérieur (220),
- sachant que la paroi intérieure (221) du composant de sertissage extérieur (220) est agencée au niveau du passage allant du tube de la première partie (220a) du composant de sertissage extérieur (220) au tube de la deuxième partie (220b) du composant de sertissage extérieur (220),
- sachant que le tube de la deuxième partie (220b) du composant de sertissage extérieur (220) est configuré pour recevoir l'élément de transmission optique (11).

8. Le câble optique préconnectorisé de l'une quelconque des revendications 1 à 7,
sachant que l'au moins un guide d'onde optique (110) dépasse de la deuxième partie (220b) du composant de sertissage extérieur (220) et est agencé dans le passage longitudinal (231) du corps de sertissage (23).

9. Le câble optique préconnectorisé de l'une quelconque des revendications 1 à 8,
sachant que la bride (222) du composant de sertissage extérieur (220) est agencée à une extrémité de la deuxième partie (220b) du composant de sertissage extérieur (220), sachant que la bride (222) est agencée dans la partie de serrage de câble (232) du corps de sertissage (23) pour fixer le composant de fixation d'éléments de traction (21) dans la partie de serrage de câble (232) du corps de sertissage (23).

10. Le câble optique préconnectorisé de l'une quelconque des revendications 1 à 9, comprenant :
- une bande de sertissage (22),
- sachant que le corps de sertissage (23) comprend une première enveloppe (230a) et une deuxième enveloppe (230b) qui sont maintenues ensemble au moyen de la bande de sertissage (22) qui est agencée autour de la première et de la deuxième enveloppe (230a, 230b) du boîtier de sertissage (23).

11. Le câble optique préconnectorisé de l'une quelconque des revendications 1 à 10,
sachant que les éléments de traction (12) sont des fils métalliques.
